# EUROPEAN PATENT APPLICATION

(11) **EP 1 870 442 A1**
(43) Date of publication of application: **26.12.2007**
(21) Application number: 06012508.5
(22) Date of filing: 19.06.2006
(51) Int. Cl.: C09D 177/12, C08G 69/44, C08G 63/685

(54) **Air drying resin and composition**

(71) Applicant: DSM IP Assets B.V., 6411 TE Heerlen (NL)
(72) Inventor: Benthem, Van Rudolfus Atonius Theodorus Maria, 6141 BR Limbricht (NL); Friederichs, Joseph Petronella, 6019 CC Wessem (NL)
(74) Representative: van Tol-Koutstaal, Charlotte A.

(57) **Abstract**

The invention relates to an airdrying resin suitable for a coating composition characterized in that the resin is a polyesteramide prepared from:
A) at least one anhydride chosen from the list containing succinic, glutaric. citraconic, itaconic or maleic anhydride or a combination of any of them, and
B) at least one alkanol-amine, and
C) at least one fatty acid.

This airdrying resin is both water- and solvent-soluble, having a combination of properties desirable for different types of applications.

The invention relates also to a method for preparing such a polyesteramide resin, to a composition comprising at least one polyesteramide resin and a method for preparing such a composition, to a substrate fully or partially coated with this composition, a method for curing the coated substrate, the cured and coated substrate and the use of resin in various applications.

## Description

The invention relates to an airdrying polyesteramide resin functionalized with unsaturated fatty acid groups; it also relates to a method for preparing such a resin, to a composition comprising at least one polyesteramide resin and a method for preparing such a composition, to a substrate fully or partially coated with this composition, a method for curing the coated substrate, the cured and coated substrate and the use of resin in various applications.

A composition containing such a resin is known from WO 00/32708. In WO 00/32708 an airdrying coating composition is disclosed, which coating composition comprises a polyesteramide containing at least two carboxyalkylamide groups derived from an unsaturated acid with between 10 and 28 carbon atoms.

WO 00/32708 has the disadvantage that the airdrying coating composition can only be made either water- or solvent-soluble. The same coating composition cannot therefore be used for both kinds of systems.

In general, paint manufacturers produce paints by adding their choice of additional components to a coating composition, comprising a binder. Paint manufacturers choose in general different components and binders when producing water-borne paints and others when producing solvent-borne paints. Thus a paint manufacturer who produces both types of paints, water-borne and solvent-borne, needs a large variety of components and binders as each component or binder is suitable for only one kind of paint, either water- or solvent-borne. This is due to various reasons, for example different pigments or other additives that are needed for solvents of different nature. It would be very advantageous, for paint manufacturers as well as for the end-users, when one resin would be available for compositions that can be dissolved both in water and solvent, while keeping its airdrying property.

It is an object of the invention to overcome the above-mentioned disadvantages and to provide an airdrying resin suitable for a coating composition wherein the resin is a polyesteramide prepared from:
A) at least one anhydride chosen from the list containing succinic, glutaric, citraconic, itaconic or maleic anhydride or a combination of any of them, and
B) at least one alkanol-amine, and
C) at least one fatty acid.

This airdrying resin is both water- and solvent-soluble, having a combination of properties desirable for different types of applications.

A polyesteramide resin is a polymer having branched structure with a high functionality obtained by the polycondensation of for example anhydride with an alkanol-amine. Functionality is understood to be the average number of reactive groups of a certain type per molecule in the resin composition. For details regarding the compounds and the processes used to produce polyesteramide in general, patent WO 99/16810 can be consulted as reference. In the present invention, to obtain the required properties, the branched polyesteramide resin was chosen such as to have three principle building blocks, alkanol-amine, anhydride and fatty acid groups.

Surprisingly it was found that such a resin has airdrying properties and it is both water- and solvent-soluble. Especially, no airdrying hyperbranched resin was found until now that is water-soluble. Another advantage is that the resin is transparent and additionally a composition containing the polyesteramide resin is quickly hardened by curing.

The three components from which the polyesteramide resin is generally prepared are: A) at least one anhydride, B) at least one alkanol-amine and C) at least one fatty acid. Preferably, unsaturated fatty acids or mixtures of fatty acids that contain also unsaturated fatty acids can be used, in order to achieve the airdrying property of the polyesteramide resin determined by the presence of the double bonds within the fatty acid chains.

The anhydride used in the preparation of the polyesteramide according to the invention is: succinic, glutaric, citraconic, itaconic or maleic anhydride, or a combination of any of them. Preferably succinic or maleic anhydride is used, and more preferably a combination of succinic anhydride and maleic anhydride is used. A ratio of between about 1:1 and 1:10 maleic anhydride to the succinic anhydride assures a better water solubility. The additional advantage of the combination of maleic and succinic anhydride is that it also boosts the airdrying. Only maleic anhydride or a too high percentage of it can induce discoloration and side-reactions, possibly making the resin less suitable for certain coating compositions.

The alkanol-amine may be a monoalkanol-amine, a dialkanol-amine, a trialkanol-amine or a mixture of any of them. The degree of branching can be set via the alkanol-amines chosen. Highly branched structures with high functionality use as starting compounds di- and trialkanol-amines. Examples of suitable alkanol-amines are described in, for example, WO 00/32708. By preference, diisopropanolamine (DIPA) is chosen.

The fatty acid used in the preparation of the polyesteramide according to the invention will generally be a fatty acid having between 12 to 22 carbon atoms, preferably between 16 and 18 carbon atoms. Examples of suitable saturated aliphatic acids are for example 2-ethyl hexanoic acid, lauric acid, versatic acid and stearic acid. Examples of suitable unsaturated fatty acids include dehydrated castor oil fatty acid, linoleic acid and/or linolenic acid. Examples of useful natural oil fatty acids are tall oil fatty acid, sunflower oil fatty acid, corn oil fatty acid, cottonseed oil fatty acid, peanut oil fatty acid, linseed oil fatty acid, soybean oil fatty acid, rapeseed oil fatty acid, rice bran oil fatty acid, safflower oil fatty acid and/or sesame oil fatty acid. In general, both saturated and unsaturated fatty acid groups may be used, however unsaturated groups are preferred due to their role in the airdrying. Mixtures of all kinds of fatty acids may be used, however it is preferred when using a mixture to use a mixture of unsaturated fatty acids.

As a measure of the amount of fatty acid incorporated into the resin composition, the oil length is used. The oil length (OL) is here and hereinafter defined as the ratio of oil (fatty acids calculated as triglyceride equivalent) to the total resin composition. A resin with an oil length of less than 40% oil is generally referred to as "short oil resin", from 40-60% oil is called medium oil resin, from 60-70% is called long oil resin and from 70-85% is called very long oil resin. A preferred range for the OL corresponding to the polyesteramide resin of the present invention ranges between 15 and 40%. Below 15% OL airdrying was found to be difficult, while above 40% OL the resin was found to be no longer water-soluble.

The process for the preparation of the polyesteramide according to the invention is characterized in that the polyesteramide is obtained by reacting an anhydride, an alkanol-amine and a fatty acid wherein the equivalent ratio alkanol-amine : anhydride (D:A) ranges between 1.0:1.0 and 1.5:1.0 and the ratio F: (3D - 2A) ranges between 0.05 : 1.00 and 0.25:1.00 wherein
F = the molar amount of fatty acid
D = the molar amount of alkanol-amine
A = the molar amount of anhydride and
(3D-2A) = the molar amount of available hydroxyl groups on the polyesteramide backbone.

According to a preferred embodiment of the invention the ratio F: (D : A) ranges between 1.20 : 1.00 and 1.40 : 1.00. and the ratio F : (3a-2A) is between 0.10 : 1.00 and 0.20 : 1.00.

The process for the preparation may take place as a one step or as a two-step process.

The two-step process may take place by a process wherein in the first step the anhydride is reacted with alkanol-amine in an equivalent ratio alkanol-amine: anhydride between 1.0:1.0 and 1.5:1.0 at a temperature between 20°C and 150°C, to form a β-hydroxyalkyl-amide, after which, at a temperature between 120°C and 180°C, a polyesteramide resin is obtained through polycondensation with water being removed through distillation and in the second step the fatty acid is added in such amount that the ratio F: (3D - 2A) ranges between 0.05 and 0.25 after which esterification with the β-hydroxyalkylamide groups of the polyesteramide resin takes place with water being removed through distillation.

The two-step process may also take place by a process wherein the anhydride is reacted with alkanol-amine in an equivalent ratio alkanol-amine: anhydride between 1.0:1.0 and 1.5 : 1.0 at a temperature between 20°C and 150°C, to form a β-hydroxyalkyl-amide, after which, at a temperature between 120°C and 180°C, a polyesteramide is obtained through polycondensation with reaction water being removed and wherein the fatty acid is added before the polycondensation is completed. Preferably the fatty acid is added between 0.5 and 4 hours before the polycondensation is completed.

The one step process takes place by a process wherein the anhydride, alkanol-amine and fatty acid are reacted at a temperature between 120°C and 180°C, reaction water being removed and wherein the equivalent ratio alkanol-amine: anhydride ranges between 1.0:1.0 and 1.5 : 1.0 and the ratio F: (3D - 2A) ranges between 0.05 and 0.25. The reaction water can be removed by methods known to the person skilled in the art, for example distillation, azeotropic distillation, etc. Preferably distillation is used.

A resin according to the invention can for example be used as a component in pigment pastes, as a sole binder or as an assisting binder.

The invention also relates to the use of the resin according to the invention in a pigment paste. Pigment pastes also have, between others, the problem of dual solubility, i.e. the ability to be soluble both in water and in solvent. The airdrying property is also for pigment pastes an important advantage due to the improved speed in drying. Various solutions were proposed to solve the problem of solubility both in water and in solvent, desirable for coating compositions. US5723537 describes a mixture of a water-soluble polyacrylate and a solvent-soluble polyester resin along with the use of a large amount of co-solvent. US4410657 describes a copolymer from acrylic (solvent-soluble) and N-vinylic monomers (water-soluble), also in the presence of a co-solvent. The disadvantage of both suggested solutions is that the presence of a co-solvent is necessary to homogenize mixtures of polymers and water; without the co-solvent the problem of dual solubility cannot be solved. The use of co-solvents in pigment pastes has several disadvantages. First of all, a large amount of co-solvent needs to be used to obtain a good viscosity range for a corresponding coating composition. Besides the fact that it is costly and thus less economical, after applying a coating composition containing such co-solvents, evaporation of a large amount of co-solvent takes place and that may have undesirable environmental and health effects. Also the levels of co-solvents that increase the VOC (volatile organic compound) level are more and more regulated by law. All the above-mentioned issues would certainly be a disadvantage also from the point of view of the consumer.

EP0507202A1 relates to a dye paste suitable for a mixture with dye and binding agent systems, where the mixture contains water-soluble and solvent-soluble or emulsifiable organic polymeric binding agents. However, this mixture does not have the airdrying property, which property is necessary because airdrying coatings can be slowed down in the drying process by dilution of the binder with the non-drying pigment paste binder.

An embodiment of the invention is related to the use of the polyesteramide resin in a pigment paste further comprising at least one binder, at least one pigment and at least one component chosen from water or an organic solvent or a mixture of any of them.

The resin according to the invention can for example be used as additive. Examples of use of such additives may be as: dispersant for pigments, hardness modifier, in water and solvent-based paint compositions or as surfactant. As an additive, it can be used both in airdrying and non-airdrying systems. It can be also an open time improver or a rheology modifier. Here and hereinafter, with "open time" is meant the time window wherein it is still possible to make readjustments to a wet paint layer without causing a damaged appearance.

The invention also relates to a composition comprising at least one polyesteramide resin and at least one component chosen from water or an organic solvent or a mixture of any of them.

The invention also relates to a coating composition comprising at least one polyesteramide resin and at least one crosslinker.

The coating composition according to the invention may be used in all kinds of coatings, for example: water-borne or solvent-borne coatings, powder coatings or radiation curable coating compositions.

The invention also relates to a substrate, fully or partially coated with a coating obtainable by using a pigment paste prepared in the process described above.

## Claims

1. Airdrying resin suitable for a coating composition **characterized in that** the resin is a polyesteramide prepared from:
A) at least one anhydride chosen from the list containing succinic, glutaric, citraconic, itaconic or maleic anhydride or a combination of any of them, and
B) at least one alkanol-amine, and
C) at least one fatty acid.

2. Resin according to claim 1 **characterized in that** the fatty acid is incorporated in the resin in an amount equivalent to an oil-length between 15 and 40%.

3. Resin according to claim 1 **characterized in that** the polyesteramide is prepared from only succinic and/or maleic anhydride as the anhydride.

4. Process for the preparation of a polyesteramide in one step by reacting A, B, C according to claim 1, at a temperature between 120-180°C while reaction water is removed and whereby the equivalent ratio alkanol-amine: anhydride ranges between 1.0:1.0 and 1.5:1.0.

5. Process for the preparation of a polyesteramide according to claim 1 in two steps comprising step 1 wherein the anhydride is reacted with alkanol-amine in an equivalent ratio alkanol-amine : anhydride between 1.0:1.0 and 1.5 : 1.0 at a temperature between 20°C and 150°C, to form a β-hydroxyalkyl-amide and step 2 wherein a polyesteramide is obtained at a temperature between 120°C and 180°C through polycondensation, with reaction water being removed and wherein the fatty acid is added before the polycondensation is completed.

6. Composition comprising at least one resin according to anyone of claims 1-3 and at least one component chosen from water or an organic solvent or a mixture of any of them.

7. Coating composition comprising at least one resin according to anyone of claims 1-3 and at least one crosslinker.

8. Substrate, fully or partially coated with a composition according to claim 6 or 7.

9. Use of resin according to anyone of claims 1-3 in a pigment paste comprising at least one binder, at least one pigment and at least one component chosen from water or an organic solvent or a mixture of any of them.
